# FASCICULE DE BREVET EUROPEEN

(11) **EP 0 807 599 B1**
(45) Date de publication et mention de la délivrance du brevet: **12.01.2000**
(21) Numéro de dépôt: 96401038.3
(22) Date de dépôt: 13.05.1996
(51) Int. Cl.: C01B 21/04, C01B 23/00

(54) **Procédé pour l'élimination d'impuretés contenues dans un composé gazeux**
Verfahren zur Entfernung von Verunreinigungen aus gasförmingen Zusammenstellungen
Process for the removal of impurities from gas compositions

(43) Date de publication de la demande: 19.11.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny le Bretonneux (FR)
(74) Mandataire: Le Moenner, Gabriel

(56) Documents cités:
- EP-A- 0 222 497
- EP-A- 0 395 856
- EP-A- 0 454 531
- DE-A- 3 401 197
- FR-A- 2 690 357
- US-A- 4 136 062

## Description

L'invention concerne un procédé pour l'élimination substantielle de l'une au moins des impuretés monoxyde de carbone et hydrogène contenues dans un composé gazeux, notamment un mélange d'azote et/ou d'argon avec de l'oxygène, tel l'air, selon lequel on fait réagir l'une desdites impuretés avec de l'oxygène au contact d'un catalyseur.

De grandes quantités de gaz inerte, en particulier l'argon et surtout l'azote, sont utilisées par exemple dans l'industrie pharmaceutique et l'industrie électronique, notamment lors de la fabrication des semi-conducteurs. Dans ce dernier cas surtout, ces gaz inertes doivent être le plus purs possible, et, notamment, ils doivent être substantiellement exempts en des impuretés telles que le monoxyde de carbone et l'hydrogène, qui amoindrissent la qualité et les performances des semi-conducteurs. Récemment des teneurs en monoxyde de carbone et/ou d'hydrogène de l'ordre de quelques centaines de ppb (parties par milliard en volume) étaient encore tolérées.

Mais à présent, l'industrie électronique requiert des gaz inertes, tel l'azote, de haute pureté, c'est-à-dire contenant environ moins de 10 ppb en hydrogène et moins de 5 ppb en monoxyde de carbone.

En vue de préparer de l'azote de haute pureté, il a déjà été proposé par la Demanderesse, dans la demande de brevet EP-A-0.454.531, un procédé selon lequel on élimine de l'air, les impuretés monoxyde de carbone et/ou hydrogène, par passage de cet air sur un catalyseur constitué de particules d'au moins un élément métallique choisi dans le groupe constitué par le cuivre et les métaux de la famille du platine, à savoir le ruthénium, le rhodium, le palladium, l'osmium, l'iridium et le platine, ces particules étant supportées sur un support présentant une forte surface spécifique. Lesdits supports peuvent consister en des zéolithes, de la silice ou de l'alumine. L'air traité par passage sur le catalyseur est, le plus souvent, de l'air comprimé au moyen d'un compresseur ; à la sortie de ce compresseur, l'air présente une température habituellement comprise entre 80°C et 120°C. L'air ainsi purifié est débarrassé de l'eau et du dioxyde de carbone qu'il contient, par exemple par adsorption sur un tamis moléculaire.

Après quoi, l'air est envoyé dans une colonne de distillation en vue de la séparation de l'azote des autres constituants de l'air, essentiellement l'oxygène. La Demanderesse a pu constater que de bons résultats ont pu être obtenus au moyen de ce procédé, en particulier lorsque les catalyseurs comportent des teneurs importantes en des particules telles le palladium et le platine. Cependant, ces métaux précieux sont d'un coût relativement élevé, ce qui renchérit d'autant le procédé global de préparation de l'azote de haute pureté.

Par ailleurs, il a pu être constaté par la Demanderesse que les catalyseurs décrits dans la demande de brevet EP-A-0.454.531 devaient, pour une élimination efficace du monoxyde de carbone et de l'hydrogène, être soit régénérés fréquemment, par exemple deux fois par jour, soit être mis en contact avec de l'air comprimé dont la température est portée à environ 200°C.

La régénération fréquente du catalyseur entraîne la mise en oeuvre de deux lits de catalyseurs mis en parallèle et fonctionnant en alternance, l'un permettant l'épuration de l'air tandis que l'autre est régénéré. Comme indiqué plus haut, l'air comprimé sort du compresseur à une température habituellement comprise entre 80°C et 120°C. Il convient donc de disposer de moyens de chauffage pour porter l'air entrant au contact du catalyseur à une température de 200°C. On constate que la mise en oeuvre des catalyseurs selon la demande de brevet EP-A-0.454.531 requiert une installation onéreuse, notamment du fait desdits moyens de chauffage, et coûteuse en énergie.

Par ailleurs, le document US-A-4,136,062 décrit un catalyseur constitué de particules d'or et de palladium supportées par un support de type silice ou gel de silice utilisable, en particulier, pour oxyder les alcools en aldéhydes et cétones, pour oxyder de l'éthylène en acide acétique et en acétate de vinyle, pour catalyser l'hydrogénation d'hydrocarbures insaturés ou d'autres composés carbonyles, et pour catalyser la conversion de l'hydrogène et de l'oxygène en eau.

Le document EP-A-222497 enseigne un procédé d'oxydation simultanée du monoxyde de carbone et des carburants non brûlés présents dans les rejets d'un véhicule à moteur à combustion interne avec un catalyseur constitué de particules de palladium et d'argent supportées par de l'alumine gamma.

Le document FR-A-2690357 décrit un procédé de purification d'air avec élimination par oxydation de l'hydrogène et du monoxyde de carbone avec un catalyseur constitué de particules d'un ou plusieurs métaux choisis parmi le ruthénium, le cuivre, le platine, l'osmium, le palladium, l'iridium, le ruthénium, le rhénium et le rhodium supportés, en particulier, par un support choisi parmi les alumines amorphes et les minéraux hydrophobes, tels les zéolites, la silice, les alumines alpha ou les céramiques, par exemple l'oxyde de zirconium.

Le document EP-A-395856 a trait à un procédé d'oxydation catalytique du monoxyde de carbone avec un catalyseur à base d'oxyde de fer sur un support de type alumine gamma.

En outre, le document DE-A-3401197 divulgue un procédé d'oxydation catalytique avec un catalyseur à base de palladium déposé sur un support de type oxyde d'aluminium.

La Demanderesse a alors cherché un procédé pour éliminer substantiellement l'une au moins des impuretés monoxyde de carbone et hydrogène obviant aux inconvénients mentionnés plus haut.

Ainsi, un premier objet de l'invention consiste en un procédé pour éliminer l'une desdites impuretés d'un comprimé gazeux, pouvant être mis en oeuvre au moyen d'un catalyseur ayant une teneur faible en métaux précieux.

Un second objet de l'invention consiste en un tel procédé pouvant être réalisé sur une longue période de temps, par exemple plusieurs semaines, voire plusieurs mois ou même plusieurs années, sans qu'il soit nécessaire de régénérer le catalyseur, ou de porter le composé gazeux à traiter à une température de l'ordre de 200°C.

La présente invention concerne un procédé pour l'élimination substantielle de l'une au moins des impuretés monoxyde de carbone et hydrogène contenues dans un composé gazeux, caractérisé en ce que :
(a) on fait réagir l'une au moins des impuretés monoxyde de carbone et hydrogène contenues dans ledit composé gazeux avec de l'oxygène, au contact d'un catalyseur comprenant des particules supportées (i) d'or, d'argent ou d'or et d'argent (ci-dessous également dénommées particules d'or et/ou d'argent) et (ii) d'au moins un métal de la famille du platine, les particules étant supportées par un support, de préférence TiO₂, pour former, respectivement, du dioxyde de carbone et de l'eau ;
(b) le cas échéant, on élimine le dioxyde de carbone et l'eau dudit composé gazeux;
(c) on récupère ledit composé gazeux substantiellement exempt en ses impuretés monoxyde de carbone et/ou hydrogène.

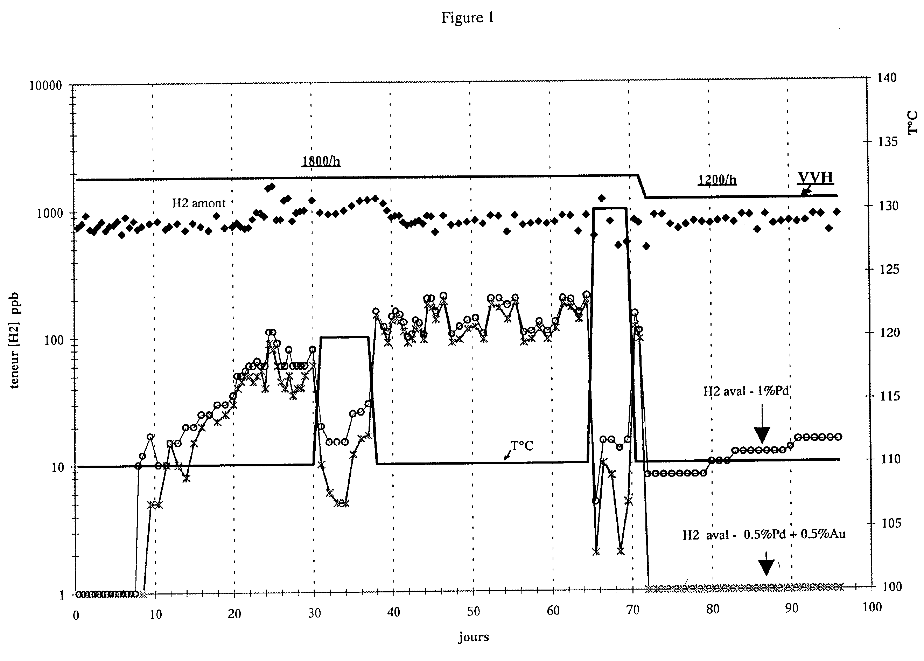

L'invention est décrite plus en détail ci-après, et au regard de la figure 1 qui représente l'élimination de l'hydrogène de l'air d'une part selon le procédé de l'invention et, d'autre part, un procédé non conforme à l'invention.

Selon un mode de réalisation avantageux de l'invention, le catalyseur est constitué de particules supportées d'or et de palladium.

Selon un autre mode de réalisation avantageux de l'invention, le catalyseur est constitué de particules supportées d'argent et de palladium.

Les particules sont généralement supportées par un support minéral. Ce support minéral est, de préférence, du dioxyde de titane (TiO₂), mais peut être également choisi dans le groupe constitué par l'alumine, les zéolithes ou une silice. L'alumine peut être une alumine gamma ou une alumine alpha. La zéolithe peut être choisie dans le groupe constitué par les zéolithes X, telles les zéolithes 13X et 10X, les zéolithes A, telles les zéolithes 5A ou 4A, les zéolithes Y, les chabazites, les mordénites ou les silicalites. De telles zéolithes sont par exemple décrites dans les brevets US-A-2.882.244; US-A-3.140.932 et US-A-3.140.933.

Le rapport pondéral entre les particules d'or et/ou d'argent et les particules de métal de la famille du platine peut être compris entre 10/90 et 90/10 ; de préférence, ce rapport est de l'ordre de 50/50. La teneur en poids des particules d'or et/ou d'argent peut être comprise entre 0,1 et 5 %, de préférence, comprise entre 0,1 et 1,5 % par rapport au poids total du catalyseur. La teneur en poids du métal de la famille du platine est habituellement comprise entre 0,3 et 2,5 %, de préférence entre 0,3 et 1 %, par rapport au poids total du catalyseur.

Il peut être avantageux d'enrober le catalyseur tel que défini ci-dessus par de l'oxyde de cérium (CeO₂), ce notamment en vue d'en améliorer les propriétés mécaniques. Le poids de cet enrobage d'oxyde de cérium (CeO₂) peut être compris entre 5 et 15 % par rapport au poids du catalyseur.

Ledit support peut se présenter sous différentes formes, par exemple sous forme de copeaux ou de nids d'abeille (structure monolithe), mais de préférence, il est sous forme de billes ou de bâtonnets, pouvant être facilement disposé(e)s dans un réacteur.

Le support utilisé est habituellement poreux et peut présenter un volume de pores inférieur ou égal à 1 cm³/g, de préférence compris entre 0,2 et 0,5 cm³/g.

Le rayon des pores de ce support peut être inférieur ou égal à 25 nm, et de préférence il est compris entre 1 et 15 nm. La surface spécifique du support peut être comprise entre 10 et 300 m²/g, de préférence entre 50 et 250 m²/g, plus préférentiellement entre 50 et 150 m²/g. La masse volumique du support peut être comprise entre 500 et 1000 g/l. Quand le support est TiO₂, sa masse volumique est de préférence comprise entre 600 et 900 g/l.

Un catalyseur mis en oeuvre dans le procédé de l'invention peut être préparé selon des procédés connus de co-précipitation ou d'imprégnation. On préfère des catalyseurs préparés selon un procédé d'imprégnation. Pour ce faire, on peut préparer un catalyseur en imprégnant le support choisi avec une solution comprenant un sel d'or et/ou d'argent et un sel d'au moins un métal de la famille du platine. Ledit sel d'or et/ou d'argent ou ledit sel de la famille du platine peut être un halogénure, notamment un chlorure ou avantageusement un nitrate. Après imprégnation, on sèche le support imprégné, par exemple en le soumettant pendant une période de 12 à 48 heures à une température comprise entre 50°C et 150°C. On calcine alors le support, de préférence à une température comprise entre 300°C et 550°C. Cette calcination du support imprégné séché peut être effectuée à l'air, de préférence un air sec. Après calcination, les particules de métal sont réduites à chaud, par exemple par balayage au moyen d'un gaz réducteur tel l'hydrogène ou un mélange d'hydrogène et d'un gaz inerte tel l'azote.

Le procédé selon l'invention peut être notamment mis en oeuvre pour un composé gazeux consistant en un mélange d'au moins un gaz inerte avec de l'oxygène. Le gaz inerte peut être de l'azote ou de l'argon ; de préférence, le composé gazeux est de l'air.

La réaction des impuretés monoxyde de carbone et hydrogène au contact du catalyseur peut être réalisée avec de l'oxygène contenu dans le composé gazeux, notamment lorsque celui-ci consiste en de l'air, ou avec de l'oxygène additionné audit composé gazeux. La quantité d'oxygène ainsi additionnée doit au moins correspondre à la quantité stoechiométrique requise pour former du dioxyde de carbone et de l'eau, à partir desdites impuretés.

La réaction entre lesdites impuretés et l'oxygène au contact du catalyseur est habituellement réalisée avec un composé gazeux dont la température est inférieure à 130°C, plus particulièrement à une température comprise entre -40°C et 130°C, et de préférence une température comprise entre 80 et 120°C.

Lors de la réaction des impuretés avec l'oxygène au contact du catalyseur selon le procédé de la présente invention, le composé gazeux peut être soumis à une pression comprise entre 10⁵ et 3.10⁶ Pa, plus généralement entre 7.10⁵ et 1,5.10⁶ Pa.

Le composé gazeux mis au contact du catalyseur présente une vitesse spatiale réelle qui est fonction de la pression et de la température du composé gazeux traité. Généralement, la vitesse spatiale réelle est inférieure à 2000 h⁻¹, et de préférence comprise entre 1000 et 1800 h^{-1.}

Les teneurs en monoxyde de carbone et en hydrogène du composé gazeux traité selon le procédé de l'invention sont habituellement inférieures à 40 ppm (parties par million en volume), plus généralement de l'ordre de 1 ppm à 200 ppb, en chacune de ces impuretés. Le composé gazeux récupéré après mise en oeuvre du procédé selon l'invention peut comporter moins de 10 ppb d'hydrogène et moins de 5 ppb de monoxyde de carbone. Ces teneurs sont celles répondant habituellement au cahier des charges dans l'industrie électronique.

Après la réaction entre lesdites impuretés et l'oxygène, le dioxyde de carbone et l'eau formés peuvent être éliminés dudit composé gazeux. Cette élimination peut être réalisée de manière classique au moyen d'un adsorbant tel un tamis moléculaire ou de l'alumine. Cette élimination de l'eau et du dioxyde de carbone est plus particulièrement requise lorsque le composé gazeux est de l'air destiné à être ultérieurement traité par distillation cryogénique en vue de la séparation de l'azote des autres constituants de l'air, essentiellement l'oxygène et, le cas échéant, l'argon.

Le composé gazeux récupéré, exempt ou substantiellement exempt en ses impuretés monoxyde de carbone et hydrogène, peut, lorsqu'il consiste en un mélange de gaz, être ultérieurement traité en vue de séparer certains ou chacun des gaz qui le constituent. Ainsi, si ledit composé gazeux consiste en l'air, l'air récupéré subséquemment au procédé selon l'invention, peut être traité de sorte que l'on sépare l'azote et/ou l'argon de l'oxygène de l'air. Cette séparation peut être réalisée de manière classique par distillation cryogénique, par adsorption sélective (procédés PSA et VSA) ou par séparation membranaire.

Selon un autre aspect de l'invention, celle-ci concerne un procédé de préparation d'azote épuré substantiellement exempt en les impuretés monoxyde de carbone et hydrogène, à partir d'air, caractérisé en ce que :
(a) on fait réagir l'une au moins des impuretés monoxyde de carbone et hydrogène contenues dans l'air avec l'oxygène de cet air, au contact d'un catalyseur constitué de particules (i) d'or, d'argent, ou d'or et d'argent et (ii) de palladium, les particules étant supportées par du dioxyde de titane, de sorte à former, respectivement, du dioxyde de carbone et de l'eau;
(b) le cas échéant, on élimine de l'air le dioxyde de carbone et l'eau;
(c) on sépare l'azote de l'oxygène de l'air ;
(d) on récupère de l'azote de haute pureté substantiellement exempt en les impuretés monoxyde de carbone et hydrogène.

Le procédé de séparation de l'azote de l'oxygène de l'air est préférentiellement un procédé classique de distillation cryogénique.

Les exemples qui suivent ont pour but d'illustrer la présente invention :

### Exemple 1 :

Dans un réacteur, on a disposé différents catalyseurs, conformes ou non à l'invention, et constitués de particules métalliques supportées par des billes d'alumine. On a traité dans ce réacteur un flux d'air à 7 bar en vue de l'élimination de ses impuretés monoxyde de carbone et hydrogène. La vitesse spatiale réelle de l'air au travers du réacteur était de 1800h⁻¹.

Les teneurs amont (à l'entrée du réacteur) et aval (à la sortie du réacteur) en monoxyde de carbone et hydrogène contenus dans l'air traité ont été mesurées au moyen d'un analyseur RGA3 commercialisé par la société Trace Analytical, dont le seuil de détection était inférieur ou égal à 5 ppb pour l'hydrogène et inférieur à 3 ppb pour le monoxyde de carbone.

Le procédé selon l'invention peut être mis en oeuvre au moyen d'un catalyseur disposé en un lit unique, qu'il n'est pas nécessaire de régénérer. En effet, le catalyseur selon l'invention permet une élimination des impuretés monoxyde de carbone et hydrogène d'un composé gazeux, de manière à respecter le cahier des charges de l'industrie électronique, cela sur une période de plusieurs mois, voire plusieurs années, et à une température pouvant être comprise entre 80C° et 120°C. Après ce laps de temps, il suffit de remplacer le lit de catalyseurs usagé par un nouveau lit.

La durée (en heures) de fonctionnement du catalyseur, ainsi que les teneurs aval et amont en hydrogène et monoxyde de carbone de l'air traité, figurent dans le tableau I ci-après.

La durée de fonctionnement correspond à la période de temps pendant laquelle les teneurs aval en hydrogène et monoxyde de carbone correspondaient au cahier des charges de l'industrie électronique, soit une teneur inférieure à 10 ppb en hydrogène et une teneur inférieure à 5 ppb en monoxyde de carbone. L'essai est interrompu dès que les teneurs aval dépassent celles fixées par le cahier des charges. Toutefois, l'essai peut être interrompu volontairement lorsque les teneurs aval restent conformes au cahier des charges, dans la mesure où l'expérimentateur a considéré que la durée de l'essai est suffisamment probante quant à l'efficacité du catalyseur.

**Tableau I**

| Essais | Température (°C) | Teneur du catalyseur (% en poids) | | Teneurs amont (en ppb) | | Teneurs aval (en ppb) | | H₂O dans l'air amont (g/Nm³) | Durée (h) |
|---|---|---|---|---|---|---|---|---|---|
| | | Au | Pd | H₂ | CO | H₂ | CO | | |
| 1 | 110 | 0,5 | 0,5 | 1400 | 350 | ND | 3 | 7 | 150 |
| A | 110 | - | 2 | 1500 | 350 | 15 | 3 | 7 | 2 |
| B | 100 | - | 0,5 | 600 | 300 | 100 | 5 | 1 | 2 |
| C | 120 | 0,5 | - | 600 | 300 | 480 | 5 | 1 | 2 |
| ND = non détecté. | | | | | | | | | |

L'essai 1 est conforme à l'invention.

Les essais A, B et C sont des exemples comparatifs.

On peut constater, à l'examen du tableau I, qu'un catalyseur conforme à l'invention comportant 1 % en poids de métal précieux (Au + Pd) palladium et d'or présente une durée de fonctionnement très supérieure à celle d'un catalyseur classique, comportant 2 % en poids de palladium, et ce pour une meilleure efficacité (élimination des impuretés).

Les essais B et C permettent de constater en outre qu'un catalyseur ne comportant que des particules de palladium est plus efficace qu'un catalyseur ne comportant que de l'or et ce, bien que la température mise en oeuvre dans l'essai C soit plus élevée que celle de l'essai B.

### Exemple 2 :

Dans un réacteur identique à celui de l'exemple 1, on a disposé différents catalyseurs, conformes ou non à l'invention, constitués de particules métalliques supportées par des bâtonnets de dioxyde de titane. La masse volumique de ce support était de 915 g/l et sa surface spécifique de 140 m²/g. Ces catalyseurs sont enrobés ou non par une couche de CeO₂.

On a traité dans ces réacteurs de l'air à 7 bar, contenant 1000 ppb d'hydrogène et 500 ppb de monoxyde de carbone, et sous une vitesse spatiale réelle de 1800 h⁻¹.

La teneur en eau de l'air amont, les teneurs en monoxyde de carbone et hydrogène de l'air aval ainsi que la durée de fonctionnement du catalyseur (voir exemple 1) figurent dans le tableau II ci-après :

**Tableau II**

| Essais | Température (°C) | Teneur du catalyseur (% en poids) | | CeO₂ | Teneurs aval (en ppb) | | H₂O (g/Nm³) | Durée (h) |
|---|---|---|---|---|---|---|---|---|
| | | Au | Pd | | H₂ | CO | | |
| 2 | 100 | 0,5 | 0,5 | O | ND | 3 | 7 | 125 |
| 3 | 110 | 0,5 | 0,5 | O | ND | 3 | 10 | 50 |
| 4 | 110 | 0,5 | 0,5 | O | ND | 3 | 7 | 60 |
| 5 | 120 | 0,5 | 0,5 | O | ND | 3 | 10 | 24 |
| 6 | 100 | 0,5 | 0,5 | N | 10 | 3 | 10 | 20 |
| 7 | 110 | 0,5 | 0,5 | N | ND | 3 | 10 | 150 |
| D | 110 | - | 2 | O | 20 | 3 | 7 | 4 |
| E | 110 | - | 2 | N | 25 | 3 | 10 | 20 |
| ND = non détecté O = enrobage CeO₂ N = absence d'enrobage CeO₂ | | | | | | | | |

Les essais 2 à 7 sont conformes à l'invention.

Les essais D et E sont non conformes à l'invention. L'essai comparatif D a été réalisé dans les mêmes conditions que l'essai 4, mais avec un catalyseur comportant 2 % en poids de palladium, et non pas 0,5 % en poids de palladium et 0,5 % en poids d'or. On constate qu'un catalyseur selon l'invention permet une durée de fonctionnement d'au moins 15 fois supérieure à celle d'un catalyseur non conforme à l'invention, et ce, d'une part, pour une meilleure efficacité d'élimination des impuretés et, d'autre part, avec une teneur en métal précieux deux fois plus faible.

L'essai 7 a été conduit dans les mêmes conditions que l'essai comparatif E, mais avec une teneur deux fois moindre en métaux précieux. Le catalyseur selon l'essai E n'a permis une épuration conforme au cahier des charges que pendant une durée inférieure à 20 heures. L'essai 7 a permis une épuration conforme au cahier des charges pendant 150 heures, après quoi l'essai a été volontairement interrompu.

### Exemple 3 :

Dans un réacteur identique à celui de l'exemple 1, on a disposé différents catalyseurs, comprenant des particules métalliques supportées par de l'alumine ou d'un dioxyde de titane identique à celui de l'exemple 2.

On a traité pendant deux heures au moyen de ces catalyseurs, de l'air comprenant 500 ppb d'hydrogène et différentes concentrations en eau. On a examiné la température minimale nécessaire pour une élimination totale de l'hydrogène. Les résultats obtenus figurent dans le tableau III ci-après :

**Tableau III**

| Essais | Support | Teneur du catalyseur (% en poids) | | | CeO₂ | Température minimale (°C) pour H₂O | | |
|---|---|---|---|---|---|---|---|---|
| | | Au | Ag | Pd | | 1 g/Nm³ | 6 g/Nm³ | 10g/Nm³ |
| 8 | TiO₂ | 0,5 | - | 0,5 | N | 70 | 100 | 110 |
| 9 | TiO₂ | 0,5 | - | 0,5 | O | - | 100 | 110 |
| 10 | TiO₂ | - | 0,5 | 0,5 | N | - | 105 | 115 |
| F | TiO₂ | - | - | 2 | N | 70 | 115 | 120 |
| G | TiO₂ | - | - | 2 | O | - | 115 | 120 |
| H | Al₂O₃ | - | - | 2 | O | 100 | 110 | 120 |
| O = enrobage CeO₂ N = absence d'enrobage CeO₂ | | | | | | | | |

Les essais 8 à 10 sont conformes à l'invention. Ils ont été réalisés avec des catalyseurs comprenant 1 % en poids de métaux précieux (Au + Pd ou Ag + Pd). Les essais F à H ne sont pas conformes à l'invention. Ils ont été réalisés avec 2 % en poids de palladium.

Il ressort de ces essais qu'un catalyseur conforme à l'invention permet la mise en oeuvre d'une quantité moindre de métaux précieux, pour un résultat similaire, voire amélioré.

### Exemple 4 :

Dans un réacteur identique à celui de l'exemple 1, on a disposé un catalyseur conforme à l'invention, consistant en des bâtonnets de TiO₂ supportant des particules de palladium et d'or. La teneur en poids en palladium et or dans le catalyseur est de 0,5 % en chacun de ces métaux.

Parallèlement, dans un réacteur identique à celui de l'exemple 1, on a disposé un catalyseur non conforme à l'invention, consistant en des bâtonnets de TiO₂ supportant des particules de palladium (1 % en poids par rapport au poids total du catalyseur). La masse volumique du TiO₂ était de 780 g/l et sa surface spécifique de 95 m²/g.

On a traité dans chacun de ces réacteurs un même flux d'air (divisé en deux flux parallèles) à 7 bar comportant environ 1000 ppb d'hydrogène et 10 g/Nm³ d'eau. Pendant 72 jours, la vitesse spatiale réelle de l'air à l'entrée du réacteur était de 1800 h⁻¹ ; après quoi, la vitesse spatiale a été amenée à 1200 h⁻¹.

Les résultats obtenus sont représentés à la figure 1. Ils montrent en particulier que, dès le huitième jour, la teneur en hydrogène de l'air traité avec le catalyseur non conforme à l'invention atteint, puis dépasse les 10 ppb. Avec une même quantité de métal précieux, un catalyseur conforme à l'invention peut maintenir une teneur inférieure à 10 ppb pendant 11 jours.

Par ailleurs, quand la WH est portée à 1200 h⁻¹, la teneur en hydrogène de l'air traité ne peut être maintenue inférieure à 10 ppb que pendant 8 jours, ce au moyen d'un catalyseur non conforme à l'invention. Or, dans ces mêmes conditions, mais avec un catalyseur conforme à l'invention, l'hydrogène n'a pu être détecté sur une période d'au moins 28 jours.

### Exemple 5 :

Dans un réacteur n° 1 identique à celui de l'exemple 1, on a disposé un catalyseur conforme à l'invention, consistant en des bâtonnets de TiO₂ supportant des particules de palladium. La teneur en poids en palladium supporté par le catalyseur est de 0,5 %. La masse volumique était de 780 g/l et sa surface spécifique de 95 m²/g.

Parallèlement, dans un réacteur n° 2 identique à celui de l'exemple 1, on a disposé un catalyseur non-conforme à l'invention, consistant en des billes de ZrO₂ supportant des particules de palladium (0,5 % en poids par rapport au poids total du catalyseur). La masse volumique du ZrO₂ était de 1200 g/l et sa surface spécifique de 95 m²/g.

On a traité dans chacun de ces réacteurs un même flux d'air (divisé en 2 flux parallèles) à 7 bars comportant environ 1000 ppb de H₂ (teneur amont) et 1g/Nm³ d'eau.

La vitesse spatiale réelle de l'air à l'entrée du réacteur était de 1800 h⁻¹ et la température opératoire de 120°C.

Après 10 heures d'essai, la charge de catalyseur 0,5 % Pd supporté sur ZrO₂ et contenue dans le réacteur n° 2 a été remplacée par une charge de catalyseur à 0,5 % Pd supporté par des billes de MgO ; sa masse volumique était de 950 g/l. Les conditions d'essai (pression, débit, pollution...) sont analogues à celles de l'essai effectué sur le réacteur n° 2 précédemment rempli de billes de ZrO₂ supportant 0,5 % Pd.

Les résultats obtenus à l'aide de ces trois catalyseurs sont consignés dans le tableau IV ci-après :

**TABLEAU IV**

| Essais | Support | Teneur du catalyseur | Teneur aval (ppb) | | durée (h) |
|---|---|---|---|---|---|
| | | | H₂ | CO | |
| 11 | TiO₂ | 0,5 % Pd | ND | 3 | 200 |
| I | ZrO₂ | 0,5 % Pd | 400 | 3 | 10 |
| J | MgO | 0,5 % Pd | 420 | 3 | 10 |
| ND : non détecté | | | | | |

Il ressort du tableau IV que l'essai 11 est conforme à l'invention, alors que les essais I et J ne le sont pas.

En effet, bien que les trois catalyseurs testés contiennent une masse de particules de Pd identique (0,5 % Pd en poids), seul le support TiO₂ imprégné de Pd permet d'obtenir une épuration en H₂ maximale (non détectable) ; la différence d'efficacité est donc bien imputable à la nature du support (TiO₂).

### Exemple 6 :

Dans le réacteur n° 1 identique à celui de l'exemple 1, on a disposé un catalyseur conforme à l'invention, consistant en des bâtonnets de TiO₂ supportant 0,5 % Pd + 5 % d'Ag (% en poids par rapport à la masse du catalyseur); la masse volumique de ce catalyseur était de 850 g/l et sa surface spécifique de 150 m²/g.

Parallèlement, on a disposé dans un réacteur n° 2 identique à celui de l'exemple 1, un catalyseur non conforme à l'invention consistant en des billes d'Al₂O₃ supportant 0,5 % Pd + 5 % Ag (% en poids) ; sa masse volumique était de 670 g/l et sa surface spécifique de 120 m²/g.

On a traité dans chacun des deux réacteurs un même flux d'air (divisé en 2 flux parallèles) à 7 bars comportant environ 1000 ppb de H₂ (teneur amont) et 8 g/Nm² d'eau. La vitesse spaciale réelle de l'air à l'entrée du réacteur était de 1800/l et la température opératoire de 110°C.

Les résultats obtenus à l'aide de ces deux catalyseurs sont consignés dans le tableau V ci-après :

**TABLEAU V**

| essais | Support | Teneur (% poids) du catalyseur | | Teneur aval H₂ (ppb) | Durée (h) |
|---|---|---|---|---|---|
| | | Pd | Ag | | |
| 12 | TiO₂ | 0;5 | 5 | ND | 400 |
| K | Al₂O₃ | 0,5 | 5 | 800 | 200 |
| ND = non détecté | | | | | |

Il ressort du tableau V ci-dessus que l'essai 12 est conforme à l'invention, alors que l'essai K ne l'est pas.

Là encore, bien que les deux supports mis en oeuvre soient imprégnés de la même masse de particules Pd (0,5 %) et Ag (5 %), on contaste que seul le catalyseur de l'essai 12 (conforme à l'invention) permet d'obtenir une efficacité maximale (non détectable) dans la purification du flux d'air en ses impuretés H₂.

Par ailleurs, on remarquera que le support classique Al₂O₃ est quasiment inefficace ; le flux d'air aval comprenant encore 80 % de ses impuretés H₂.

Le rôle et la nature du support (TiO₂) sont donc primordiaux dans ce type de purification.

Les essais précédents démontrent donc bien l'efficacité surprenante du catalyseur selon l'invention.

## Revendications

1. Procédé pour l'élimination substantielle de l'une au moins des impuretés monoxyde de carbone et hydrogène contenues dans un composé gazeux, caractérisé en ce que :
(a) on fait réagir l'une au moins des impuretés monoxyde de carbone et hydrogène contenues dans ledit composé gazeux avec de l'oxygène, au contact d'un catalyseur comprenant des particules, d'une part, (i) d'or, d'argent ou d'or et d'argent et, d'autre part, (ii) d'au moins un métal de la famille du platine, ces particules étant supportées par du dioxyde de titane, pour former, respectivement, du dioxyde de carbone et de l'eau ;
(b) le cas échéant, on élimine le dioxyde de carbone et l'eau dudit composé gazeux ;
(c) on récupère ledit composé gazeux substantiellement exempt en ses impuretés monoxyde de carbone et/ou d'hydrogène.

2. Procédé selon la revendication 1, caractérisé en ce que le catalyseur comprend des particules supportées d'or et de palladium.

3. Procédé selon la revendication 1, caractérisé en ce que le catalyseur comprend des particules supportées d'argent et de palladium.

4. Procédé selon l'une des revendications 1 à 3, caractérisé en ce que ledit support est enrobé par de l'oxyde de cérium (CeO₂).

5. Procédé selon l'une des revendications 1 à 4, caractérisé en ce que le rapport pondéral entre (i) les particules d'or, d'argent, ou d'or et d'argent et (ii) les particules de métal de la famille du platine est compris entre 90/10 et 10/90, de préférence de l'ordre de 50/50.

6. Procédé selon l'une des revendications 1 à 5, caractérisé en ce que la teneur en poids des particules d'or et/ou d'argent est comprise entre 0,1 % et 5 %, de préférence entre 0,1 et 1,5 % par rapport au poids total dudit catalyseur.

7. Procédé selon l'une des revendications 1 à 6, caractérisé en ce que la teneur en poids du métal de la famille du platine est compris entre 0,3 et 2,5 %, de préférence entre 0,3 et 1 % par rapport au poids total du catalyseur.

8. Procédé selon l'une des revendications 1 à 7, caractérisé en ce que le composé gazeux est un mélange d'au moins un gaz inerte et d'oxygène, notamment un mélange comprenant de l'oxygène et de l'azote.

9. Procédé selon l'une des revendications 1 à 8, caractérisé en ce que le composé gazeux est de l'air.

10. Procédé selon l'une des revendications 1 à 9, caractérisé en ce que le composé gazeux au contact du catalyseur est soumis à une pression comprise entre 10⁵ et 3.10⁶ Pa, de préférence entre 7.10⁵ et 1,5.10⁶ Pa.

11. Procédé selon l'une des revendications précédentes, caractérisé en ce que la température du gaz mis au contact du catalyseur est inférieure à 130°C et, de préférence, comprise entre 80 et 120°C, et la vitesse spatiale réelle inférieure à 2000 h⁻¹, de préférence comprise entre 1000 et 1800 h⁻¹.

12. Procédé de préparation d'azote substantiellement exempt en les impuretés monoxyde de carbone et hydrogène, à partir d'air, caractérisé en ce que :
(a) on fait réagir l'une au moins des impuretés monoxyde de carbone et hydrogène contenues dans l'air avec l'oxygène de cet air, au contact d'un catalyseur constitué de particules (i) d'or, d'argent, ou d'or et d'argent, et (ii) de palladium, les particules étant supportées par du dioxyde de titane de sorte à former, respectivement, du dioxyde de carbone et de l'eau ;
(b) le cas échéant, on élimine de l'air le dioxyde de carbone et l'eau ;
(c) on sépare l'azote de l'oxygène de l'air ;
(d) on récupère de l'azote de haute pureté substantiellement exempt en les impuretés monoxyde de carbone et hydrogène.

13. Procédé selon la revendication 12, caractérisé en ce qu'on sépare l'azote de l'oxygène de l'air, par distillation cryogénique.

## Claims

1. Process for the substantial removal of at least one of the carbon monoxide and hydrogen impurities contained in a gaseous compound, characterized in that:
(a) at least one of the carbon monoxide and hydrogen impurities contained in the said gaseous compound is reacted with oxygen, in contact with a catalyst comprising particles, on the one hand, (i) of gold, of silver or of gold and silver and, on the other hand, (ii) of at least one metal from the platinum group, these particles being supported by titanium dioxide, in order to form, respectively, carbon dioxide and water;
(b) if appropriate, the carbon dioxide and water are removed from the said gaseous compound;
(c) the said gaseous compound substantially free of its carbon monoxide and/or hydrogen impurities is recovered.

2. Process according to Claim 1, characterized in that the catalyst comprises supported particles of gold and of palladium.

3. Process according to Claim 1, characterized in that the catalyst comprises supported particles of silver and of palladium.

4. Process according to one of Claims 1 to 3, characterized in that the said support is coated with cerium oxide (CeO₂).

5. Process according to one of Claims 1 to 4, characterized in that the weight ratio between (i) the gold, silver, or gold and silver particles and (ii) the particles of metal from the platinum group is between 90/10 and 10/90, preferably of the order of 50/50.

6. Process according to one of Claims 1 to 5, characterized in that the content by weight of the gold and/or silver particles is between 0.1% and 5%, preferably between 0.1 and 1.5%, relative to the total weight of the said catalyst.

7. Process according to one of Claims 1 to 6, characterized in that the content by weight of the metal from the platinum group is between 0.3 and 2.5%, preferably between 0.3 and 1%, relative to the total weight of the catalyst.

8. Process according to one of Claims 1 to 7, characterized in that the gaseous compound is a mixture of at least one inert gas and oxygen, in particular a mixture comprising oxygen and nitrogen.

9. Process according to one of Claims 1 to 8, characterized in that the gaseous compound is air.

10. Process according to one of Claims 1 to 9, characterized in that the gaseous compound in contact with the catalyst is subjected to a pressure of between 10⁵ and 3×10⁶ Pa, preferably between 7×10⁵ and 1.5×10⁶ Pa.

11. Process according to one of the preceding claims, characterized in that the temperature of the gas brought into contact with the catalyst is less than 130°C and preferably between 80 and 120°C, and the actual space velocity is less than 2000 h⁻¹, preferably between 1000 and 1800 h⁻¹.

12. Process for the preparation of nitrogen substantially free of carbon monoxide and hydrogen impurities, from air, characterized in that:
(a) at least one of the carbon monoxide and hydrogen impurities contained in the air is reacted with the oxygen of this air, in contact with a catalyst comprising particles (i) of gold, of silver or of gold and silver, and (ii) of palladium, the particles being supported by titanium dioxide so as to form, respectively, carbon dioxide and water;
(b) if appropriate, the carbon dioxide and water are removed from the air;
(c) the nitrogen is separated from the oxygen of the air; and
(d) high-purity nitrogen substantially free of the carbon monoxide and hydrogen impurities is recovered.

13. Process according to Claim 12, characterized in that the nitrogen is separated from the oxygen of the air by cryogenic distillation.

## Patentansprüche

1. Verfahren zur weitgehenden Abtrennung mindestens einer der in einem Gasgemisch enthaltenen Verunreinigungen Kohlenmonoxid und Wasserstoff, dadurch gekennzeichnet, daß man:
(a) mindestens eine der in dem Gasgemisch enthaltenen Verunreinigungen Kohlenmonoxid und Wasserstoff an einem Katalysator, der einerseits Teilchen aus (i) Gold, Silber oder Gold und Silber und andererseits Teilchen aus (ii) mindestens einem Platingruppenmetall enthält, wobei diese Teilchen auf Titandioxid geträgert sind, mit Sauerstoff zu Kohlendioxid bzw. Wasser umsetzt;
(b) gegebenenfalls das Kohlendioxid und das Wasser aus dem Gasgemisch abtrennt und
(c) das weitgehend von den Verunreinigungen Kohlenmonoxid und/oder Wasserstoff freie Gas zurückgewinnt.

2. Verfahren nach Anspruch 1, dadurch gekennzeichnet, daß man als Katalysator geträgerte Gold- und Palladiumteilchen einsetzt.

3. Verfahren nach Anspruch 1, dadurch gekennzeichnet, daß man als Katalysator geträgerte Silberund Palladiumteilchen einsetzt.

4. Verfahren nach einem der Ansprüche 1 bis 3, dadurch gekennzeichnet, daß man einen mit CeO₂ umhüllten Träger einsetzt.

5. Verfahren nach einem der Ansprüche 1 bis 4, dadurch gekennzeichnet, daß das Gewichtsverhältnis zwischen (i) den Teilchen aus Gold, Silber oder Gold und Silber und (ii) den Teilchen aus Platingruppenmetall zwischen 90/10 und 10/90, vorzugsweise bei etwa 50/50, liegt.

6. Verfahren nach einem der Ansprüche 1 bis 5, dadurch gekennzeichnet, daß der Gehalt an Teilchen aus Silber und/oder Gold zwischen 0,1 und 5 Gew.-%, vorzugsweise zwischen 0,1 und 1,5 Gew.-%, bezogen auf das Gesamtgewicht des Katalysators, liegt.

7. Verfahren nach einem der Ansprüche 1 bis 6, dadurch gekennzeichnet, daß der Gehalt an Teilchen aus Platingruppenmetall zwischen 0,3 und 2,5 Gew.-%, vorzugsweise zwischen 0,3 und 1 Gew.-%, bezogen auf das Gesamtgewicht des Katalysators, liegt.

8. Verfahren nach einem der Ansprüche 1 bis 7, dadurch gekennzeichnet, daß man als Gasgemisch ein Gemisch aus mindestens einem Inertgas und Sauerstoff, insbesondere ein Sauerstoff und Stickstoff enthaltendes Gemisch einsetzt.

9. Verfahren nach einem der Ansprüche 1 bis 8, dadurch gekennzeichnet, daß man als Gasgemisch Luft einsetzt.

10. Verfahren nach einem der Ansprüche 1 bis 9, dadurch gekennzeichnet, daß man das Gasgemisch bei einem Druck zwischen 10⁵ und 3·10⁶ Pa, vorzugsweise zwischen 7·10⁵ und 1,5·10⁶ Pa, mit dem Katalysator in Berührung bringt.

11. Verfahren nach einem der vorhergehenden Ansprüche, dadurch gekennzeichnet, daß man das Gas bei einer Temperatur unter 130°C, vorzugsweise zwischen 80 und 120°C, und einer tatsächlichen Katalysatorbelastung von weniger als 2000 h⁻¹, vorzugsweise zwischen 1000 und 1800 h⁻¹, mit dem Katalysator in Berührung bringt.

12. Verfahren zur Herstellung von weitgehend von den Verunreinigungen Kohlenmonoxid und Wasserstoff freiem Stickstoff aus Luft, dadurch gekennzeichnet, daß man:
(a) mindestens eine der in der Luft enthaltenen Verunreinigungen Kohlenmonoxid und Wasserstoff an einem Katalysator aus Teilchen aus (i) Gold, Silber oder Gold und Silber und (ii) Palladium, wobei diese Teilchen auf Titandioxid geträgert sind, mit dem Luftsauerstoff zu Kohlendioxid bzw. Wasser umsetzt;
(b) gegebenenfalls das Kohlendioxid und das Wasser aus der Luft abtrennt;
(c) den Stickstoff vom Luftsauerstoff abtrennt und
(d) hochreinen, weitgehend von den Verunreinigungen Kohlenmonoxid und/oder Wasserstoff freien Stickstoff zurückgewinnt.

13. Verfahren nach Anspruch 12, dadurch gekennzeichnet, daß man den Stickstoff durch Tieftemperaturdestillation vom Luftsauerstoff abtrennt.
